# EUROPÄISCHE PATENTSCHRIFT

(11) **EP 1 614 947 B1**
(45) Veröffentlichungstag und Bekanntmachung des Hinweises auf die Patenterteilung: **09.07.2008**
(21) Anmeldenummer: 05001303.6
(22) Anmeldetag: 22.01.2005
(51) Int. Cl.: F16K 39/02, F16K 1/44, F16K 1/52

(54) **Elektrohydraulisches Steuerventil**
Electro-hydraulic valve
Vanne électro-hydraulique

(30) Priorität: 08.07.2004 DE 102004033514
(43) Veröffentlichungstag der Anmeldung: 11.01.2006
(73) Patentinhaber: Carl Freudenberg KG, 69569 Weinheim (DE)
(72) Erfinder: Kosean, Werner, 5020 Salzburg (AT)
(74) Vertreter: Hansmann, Dierk

(56) Entgegenhaltungen:
- DE-A1- 4 129 774
- US-A- 4 314 585
- US-A- 5 271 430
- US-A- 5 388 613
- US-B1- 6 293 514

## Beschreibung

Die Erfindung bezieht sich auf ein elektrohydraulisches Steuerventil für eine kontinuierliche Steuerung eines hydraulischen Widerstandes zwischen Null und Unendlich, wobei ein elektrisch steuerbarer Kolben des Ventils gegen eine Regelfeder einstellbar ist.

Ventile dieser Art sind in vielen Ausführungen bekannt. Hierbei werden üblicherweise zwei Kammern über das Ventil in Abhängigkeit einer elektrischen Anschaltung verbunden oder getrennt. Es ist hierbei üblich, Anordnungen mit Längsschieberventilen oder Sitzventilen auszubilden. Bei' Längsschieberventilen wird ein Steuerkolben in Längsrichtung verschoben. Die Trennung zwischen den Kammern wird durch entsprechende Überdeckungen bewirkt. Die Schaltzeiten sind abhängig vom Hub und den Überdeckungen. Prinzipbedingt haben diese Systeme Lecköl, d.h. es fließt Öl von der Hochzur Niederdruckseite. Die Leckölmenge ist abhängig vom Druckunterschied und von der Überdeckung. Der Vorteil dieses Systems ist die feinfühlige Regelung der Ölmenge während des Hubes durch sogenannte Feinsteuernuten. Bei Sitzventilen wird ein Steuerkolben in Längsrichtung verschoben. Die Trennung zwischen den Kanälen der Kammern wird durch eine metallische Dichtung am Ventilsitz und eine elastische Dichtung am Kolben erzielt. Diese Ventile haben kein Lecköl. Eine Feinsteuerung ist nicht vorgesehen. Die Schaltzeiten sind sehr kurz, da keine Überdeckungen überfahren werden müssen.

Nach der US-A-5,271,430 ist bereits ein elektrohydraulisches Steuerventil bekannt, wobei über einen Ventilkegel ein Durchfluß zwischen einem Zufluß einer Kammer und einem Abfluß einer gesteuerten Kammer durch einen Ventilsitz mit dem zugeordneten Ventilkegel steuerbar ist. In der gesteuerten Kammer ist eine Steuerkante angeordnet, der ein Steuersteg des verstellbaren Kolbens zugeordnet ist und Nuten mit großer Überdehnung zur Durchsteuerung aufweist. Hierbei besteht der Mangel, daß keine erforderliche Feinsteuerung durch einen Kraftausgleich zwischen beiden Seiten des Kolbens ermöglicht wird und keine kontinuierliche Steuerung erreichbar ist.

Nach der DE 41 29 774 A1 ist zusätzlich ein Schaltventil bekannt, das einen Druckausgleich über einen Kanal im Ventilkegel, Betätigungsstößel sowie Kolbenabschnitt aufweist. Dabei besitzen eine Kolbenseite und die Dichtkante eines Ventilsitzes annähernd den gleichen Durchmesser. Diese Ausbildung für Schaltventile ist auf Wegeventile nicht übertragbar, um eine Feinsteuerung durchzuführen.

Die Aufgabe der Erfindung ist es, ein gattungsgemäßes Ventil für eine elektrisch abhängige Feinsteuerung zu schaffen, das eine leckölfreie Ausbildung gewährleistet und unterschiedliche Ansteuerungen ermöglicht sowie für die unterschiedlichen Einsatzbereiche ausbildbar und anpaßbar ist.

Die Lösung dieser Aufgabe erfolgt erfindungsgemäß durch die Merkmalskombination des Anspruches 1.

Durch diese Ausführung als Sitzventil wird neben der kontinuierlichen Steuerung eines hydraulischen Widerstands zwischen Null und Unendlich zusätzlich erreicht, daß das Ventil im geschlossenen Zustand leckagefrei ist. Dadurch erfüllt dieses Steuerelement gleichzeitig eine zweite wichtige Funktion. Es kann als Sicherungselement zum Verhindern des ungewollten Absenkens von Lasten oder anderen sicherheitskritischen Bewegungen der mit diesem Ventil gesteuerten Bewegungen verwendet werden. Gegenwärtig werden für die Steuerung von hydraulischen Linear- und Rotationsmotoren meist Schieberventile eingesetzt, die prinzipbedingt nicht leckagefrei ausgeführt werden können und deshalb zusätzliche Bauelemente notwendig machen, um sicherheitskritische Aufgaben systemtechnisch zu lösen.

Ein weiterer Vorteil ist die sehr einfache und aus systemtechnischer Sicht kostengünstige Realisierung unterschiedlichster Steuer- und Regelungskonzepte durch Kombination mehrerer dieser Ventile.

Zur Feinsteuerung wird vorgeschlagen, daß die am Steuersteg des Kolbens angeordneten Nuten, wie in Dreiecksform, positionsabhängig von der Kolbenstellung größere bzw. kleinere Durchtrittsquerschnitte freigeben.

Ferner ist zur Feinsteuerung vorgesehen, daß in der Sperrstellung des Ventils die Nuten eine Verbindung zwischen der gesteuerten Kammer und dem Abfluß bilden.

In Anpassung an unterschiedliche Bedarfsfälle ist vorgesehen, daß die Verstellung des Kolbens über elektrisch steuerbare Antriebe, wie On-Off-Magnete, Proportionalmagnete oder Stellmotoren, mit einem Betätigungselement zur Einwirkung auf den Kolben durchführbar ist.

Zum Einsatz für Regelungskonzepte ist vorgesehen, daß der Stellbewegung des Kolbens ein Wegsensor zugeordnet ist.

Weiterhin wird zur Realisierung für unterschiedliche Systemsteuer- und Regelungskonzepte vorgeschlagen, daß die Kammer und der Abfluß des Ventils jeweils Drucksensoren aufweisen.

Zur Verwirklichung eines universellen Steuerelementes für hochpräzise Steuerungsaufgaben wird vorgeschlagen, daß die Signale der Drucksensoren und/oder des Wegsensors einer Steuereinheit zuführbar sind und über vorgegebene Steuer- und Regelprogramme eine elektrische Ansteuerung zur Einstellung des Kolbens durchführbar ist.

Ferner wird vorgeschlagen, daß die Kammern mit einer Druckwaage verbunden sind.

Eine vorteilhafte Ausbildung wird dadurch geschaffen, daß zwischen Ventilgehäuse und Antrieb ein Aufnahmeraum für eine elektrische Ansteuerung mit Steuer- und Regelprogramm ausgebildet ist.

Für den Einsatz als universelles Steuerelement ist vorgesehen, daß das Steuerventil als Cartridgeventil ausgebildet ist.

In der zeichnung ist ein Ausführungsbeispiel der Erfindung mit unterschiedlichen Ausführungen zur Anordnung schematisch dargestellt. Es zeigen:

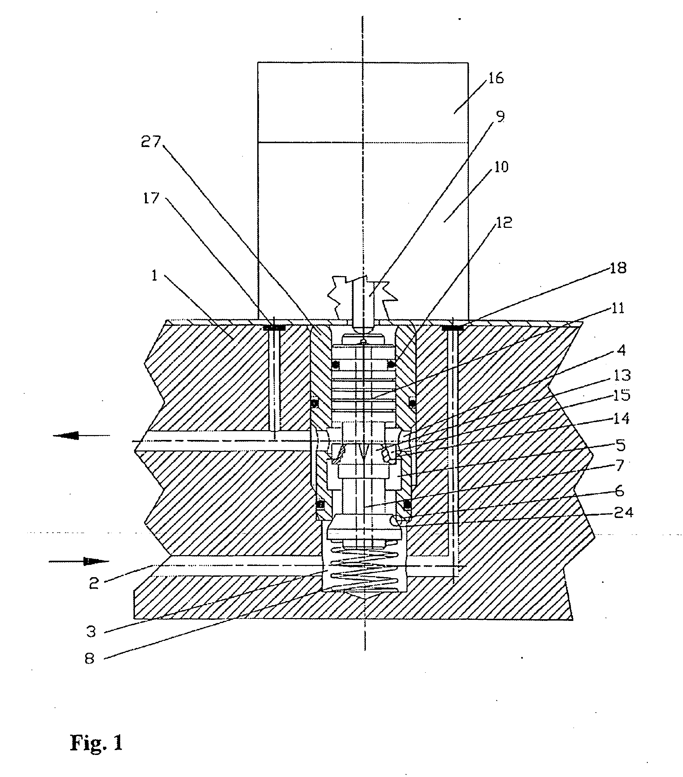

- Fig. 1: eine Schnittdarstellung eines Ventils mit einer Ansteuerung über einen Proportionalmagneten und einen Wegsensor,

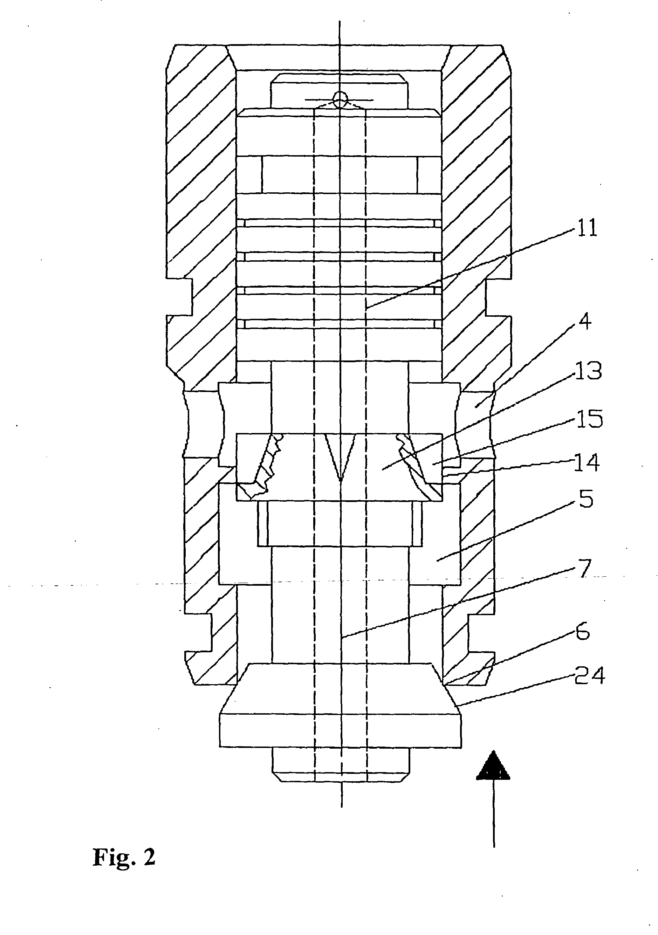

- Fig. 2: eine vergrößerte Darstellung eines Ventils in einer Schließposition,

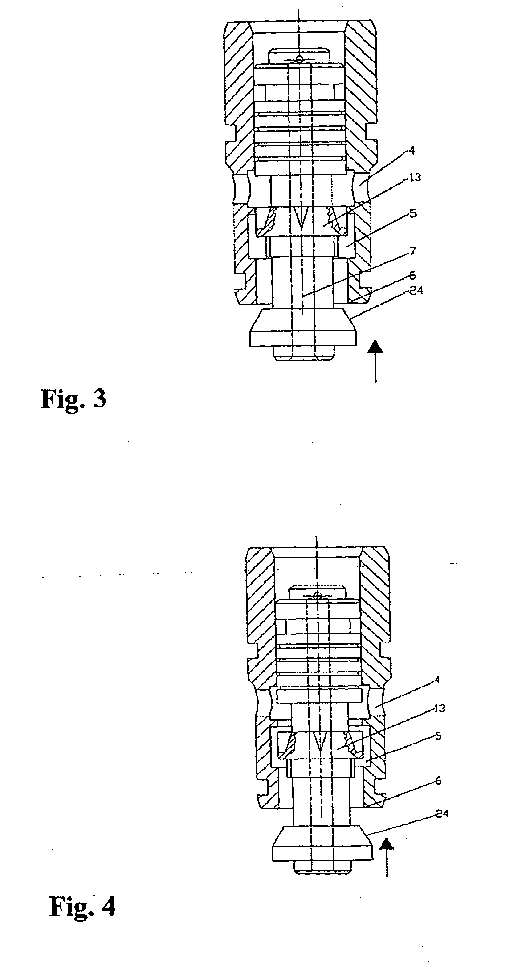

- Fig. 3 und 4: eine verkleinerte Darstellung, wie Fig. 2 in einer Feinsteuerstellung und einer offenen Stellung,
- Fig. 5: eine Schaltungsanordnung mit mehreren Ventilen zur druckabhängigen Steuerung eines Zylinders mit wechselnder Last,
- Fig. 6: eine Ventilanordnung mit einer Ansteuerung über einen On-Off-Magneten,
- Fig. 7: eine Ventilanordnung mit einer Ansteuerung über einen Proportionalmagneten,
- Fig. 8: eine Ventilanordnung mit einer Ansteuerung über ein Proportionalmagneten und einem Wegsensor sowie eine zugeordnete Steuereinheit,
- Fig. 9: eine Ventilanordnung wie Fig. 8 mit zusätzlichen Drucksensoren,
- Fig. 10: eine Anordnung mit einer zugeordneten Druckwaage und einem Aufnahmeraum für eine elektrische Ansteuerung.

Das dargestellte Ventil mit seinem Gehäuse 1 besitzt einen Zufluß 2 mit einer Kammer 3 sowie einen Abfluß 4 mit einer gesteuerten Kammer 5. Die Kammern 3,5 sind über einen Ventilsitz 6, der über einen Kolben 7 mit einem ventilkegel 24 steuerbar ist, verbindbar.

Der Kolben 7 ist über eine Regelfeder 8 beaufschlagt und andererseits durch ein Betätigungselement 9 über einen elektrisch steuerbaren Antrieb 10, wie einen Proportionalmagneten, gegen den Druck der Regelfeder 8 verstellbar. In diesem Fall ist ein Wegsensor 16 dem Antrieb 10 zugeordnet.

Der Kolben 7 ist dabei an beiden Seiten zum Kraftausgleich mit gleicher beaufschlagter Querschnittsfläche versehen und über eine Verbindung 11 im Kolben 7 beiderseits mit dem vorliegenden Druck der Kammer 3 beaufschlagt. Der Kolben 7 ist in diesem Fall über eine elastische Dichtung 12 in einer Hülse 27 des Gehäuses 1 eingesetzt.

Zusätzlich ist der Kolben 7 mit einem Steuersteg 13 versehen, der in der gesteuerten Kammer 5 mit einer hülsenseitigen Steuerkante 14 korrespondiert. Dieser Steuersteg 13 besitzt umfangseitige Nuten 15 als Feinsteuernuten über die Drucköl zuführbar ist. Gegebenenfalls werden diese Nuten 15 erst verstellabhängig freigegeben, wobei auch der freigegebene Querschnitt sich höhenabhängig verändern kann. Dieses wird wie beim Ausführungsbeispiel durch dreiecksförmige Nuten 15 erreicht.

Die Kammer 3 und der Abfluß 4 sind in diesem Fall mit entsprechenden Drucksensoren 17, 18 versehen, um eine druckunabhängige Regelung durchzuführen.

Durch die Bestromung des Proportionalmagneten 10 als Antrieb wird der Kolben 7 über das Betätigungselement 9 gegen die Kraft der Regelfeder 8 in die einzustellende Position verschoben, so daß das Druckmedium über den Ventilsitz 6 geführt wird. Hierbei wird über die Nuten 15 als Feinsteuernuten im Steuersteg 13 ein Querschnitt freigegeben, der bei dem vorliegenden Druckunterschied eine definierte Menge übertreten läßt.

Durch den Wegsensor 16 wird bei Einsatz einer zugeordneten Steuereinheit 19 der Einfluß der Strömungskraft eliminiert. Bei dieser Regelung ist die Menge abhängig vom Druckunterschied in den Kammern 3, 5.

Durch die jeweils zugeordneten Drucksensoren 17,18 ist es möglich, über die Steuereinheit 19 die Regelung druckunabhängig einzustellen, indem der Druckunterschied die Durchflußmenge bestimmt. Steigt die Menge über einen vorgegebenen Wert, erhöht sich die Druckdifferenz und der Kolben 7 wird verschoben, um den Druckdurchflußquerschnitt zu verringern.

Eine weitere Möglichkeit ist der Einsatz als proportional angesteuerter Mengenregler mit elektronischer Druckwaage 25. Hierbei wird mittels der Drucksensoren 17,18 im Vor- und Rücklauf die Druckdifferenz über die Drosselkante gemessen. Eine Steuereinheit 19 wertet die Meßwerte aus, vergleicht die Soll- und Istwerte und regelt den Strom für den Proportionalmagneten 10 oder Stellmotoren so, daß die Druckdifferenz und damit die Durchflußmenge den Vorgaben entspricht.

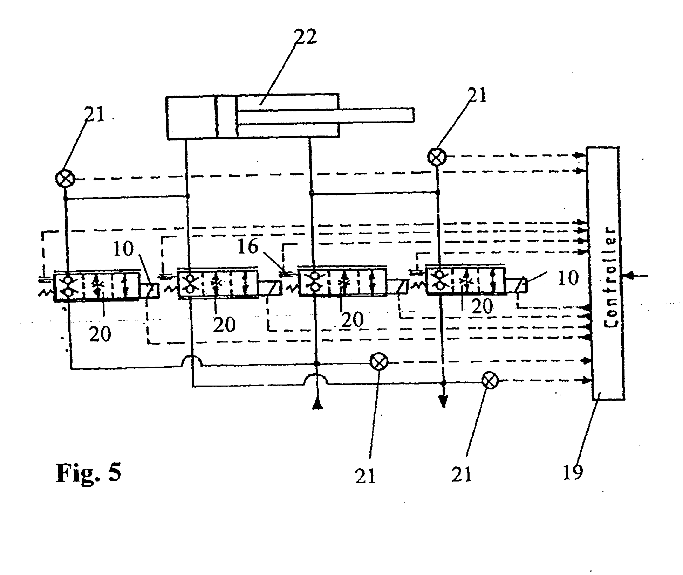

Gemäß Fig. 5 ist eine prinzipielle Schaltungsanordnung mit mehreren 2/2 Wegesitzventilen 20 mit Proportionalmagnet 10 und Wegsensoren 16 dargestellt, wobei eine Ansteuerung über eine Steuereinrichtung 19 erfolgt sowie entsprechende Drucksensoren 21 zugeordnet sind. Diese Anordnung dient zur druckunabhängigen Steuerung eines Zylinders 22 mit wechselnder Last.

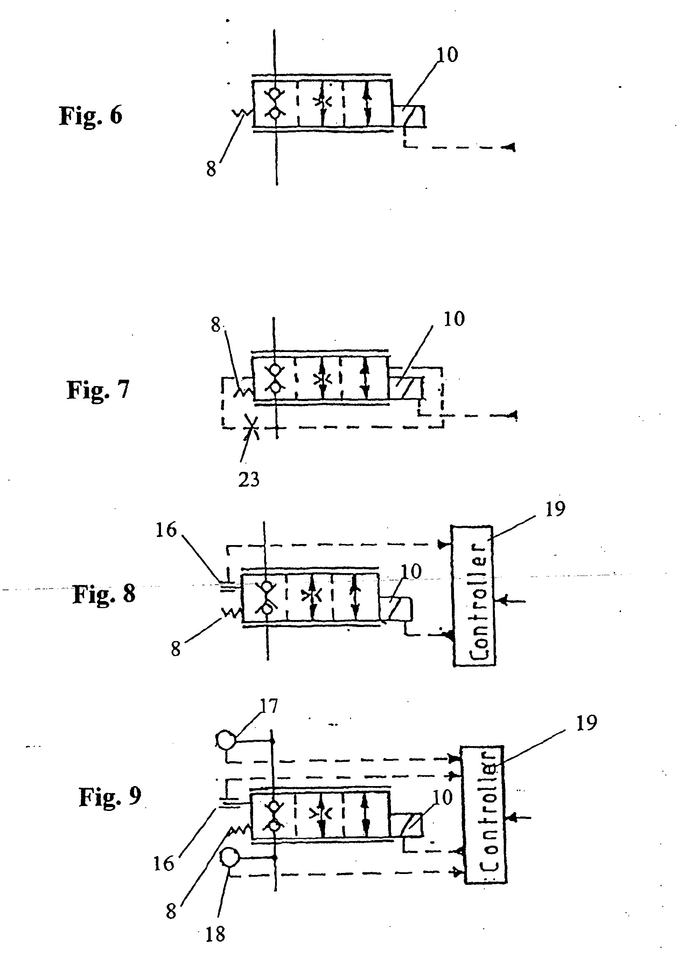

Zu den einzelnen Schaltungsanordnungen gemäß Fig. 6 bis Fig. 9 ist folgendes zu bemerken:

Gemäß Fig. 6 wird über On-Off-Magneten 10 das Sitzventil 6 über den Kolben 7 gegen die Regelfeder 8 geöffnet. Die Durchflußmenge ist abhängig von dem Öffnungsverschnitt am Steuersteg 13 des Kolbens 7, damit also vom Hub des Kolbens 7 und vom Druckgefälle an der Steuerkante. Die beidseitig flächengleiche und druckausgeglichene Kolbenkonstruktion ermöglicht Öldurchfluß in beiden Richtungen. Durch dieses System werden unerwünschte Schließ- oder Öffnungskräfte eliminiert.

Eine Dichtung 12 dichtet die Kolbenführung ab und das Ventil ist durch einen metallisch dichtenden Sitz leckölfrei.

Gemäß Fig. 7 ist als Antrieb 10 ein On-Off-Magnet angeordnet und öffnet das Sitzventil über den Kolben 7 gegen die Regelfeder 8. Die beidseitig flächengleiche und druckausgeglichene Sitz-Kolbenkonstruktion ermöglicht den Öldurchfluß in beiden Richtungen. Hierdurch werden unerwünschte Schließ- oder Öffnungskräfte eliminiert.

Eine Dichtung 12 dichtet die Kolbenführung ab und durch den metallisch dichtenden Sitz ist das Ventil leckölfrei. Durch eine Dämpfungsdüse 23 kann ein Schaltschlag verhindert werden.

Gemäß Fig. 8 wird über einen Proportionalmagneten 10 das Sitzventil geöffnet. Die Stromstärke und damit der Hub des Kolbens 7 wird über eine Steuereinheit 19 aufgrund der Vorgaben errechnet, wobei über einen Wegsensor 16 eine Kontrolle erfolgt.

Gemäß Fig. 9 erfolgt wie in anderen Fällen die Öffnung des Sitzventils über einen Proportionalmagneten 10. Der Hub des Kolbens 7 wird durch die Steuereinheit 19 errechnet. Hierbei wird der durch die Drucksensoren 17,18 vor und hinter der Drosselstelle gemessene Durchflußwiderstand sowie die durch den Wegsensor 16 ermittelte Position des Kolbens 7 mit einem vorgegebenen Kennlinienfeld verglichen. Eine Änderung des Durchflußwiderstandes durch Druck- oder Mengenänderungen wird erfaßt und die Steuereinheit gibt die korrigierte Verstellung über die Stromstärke vor, um eine Durchflußmenge konstant zu halten.

Der Wegsensor 16 ermöglicht hierbei eine sehr schnelle Regelgeschwindigkeit und eine höhere Genauigkeit im niedrigen Durchflußbereich. Die beidseitig flächengleiche und druckausgeglichene Sitz-KolbenKonstruktion ermöglicht den Öldurchfluß in beiden Richtungen. Durch dieses System werden unerwünschte Schließ- oder Öffnungskräfte eliminiert.

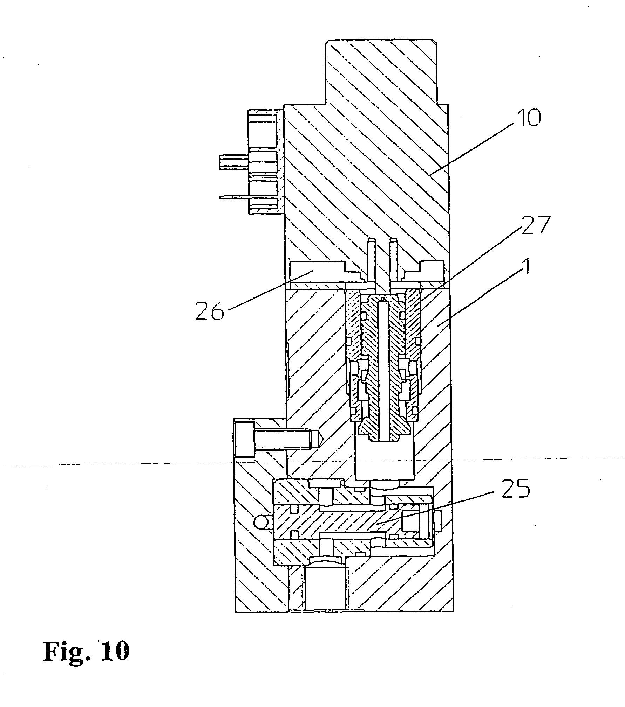

Gemäß Fig. 10 ist zusätzlich ein Aufnahmeraum 26 für eine elektrische Ansteuerung mit Steuer- und Rechenprogramm zwischen dem eigentlichen Ventilgehäuse 1 und dem Antrieb 10 vorgesehen.

## Patentansprüche

1. Elektrohydraulisches Steuerventil für eine kontinuierliche Steuerung eines hydraulischen Widerstandes zwischen Null und Unendlich, wobei ein elektrisch steuerbarer Kolben (7) des Ventils gegen eine Regelfeder (8) einstellbar ist und ein Ventilsitz (6) über einen ventilkegel (24) des Kolbens (7) steuerbar ist sowie der Kolben (7) zum Kraftausgleich eine Verbindung (11) zwischen beiden Seiten des Kolbens (7) zur Verbindung mit einer Kammer (3) aufweist und beide Seiten des Kolbens (7) mit gleicher beaufschlagter Querschnittsfläche ausgebildet sind, wobei das Ventil als Sitzventil ausgebildet ist und ein Durchfluß zwischen einem Zufluß (2), der Kammer (3) und einem Abfluß (4) einer gesteuerten Kammer (5) über den Ventilsitz (6) mittels des Kolbens (7) mit dem Ventilkegel (24) steuerbar ist und in der gesteuerten Kammer (5) eine Steuerkante (14) angeordnet ist, der ein Steuersteg (13) des verstellbaren Kolbens (7) zugeordnet ist und wobei der Steuersteg (13) Nuten (15) zur Durchtrittsteuerung aufweist, die abhängig vom Steuersteg (13) durch die Bewegung des Kolbens (7) einen definierten Mengenübertritt zur Feinsteuerung freigeben.

2. Elektrohydraulisches Steuerventil nach Anspruch 1, **dadurch gekennzeichnet, daß** die am Steuersteg (13) des Kolbens (7) angeordneten Nuten (15), wie in Dreiecksform, positionsabhängig von der Kolbenstellung größere bzw. kleinere Durchtrittsquerschnitte freigeben.

3. Elektrohydraulisches Steuerventil nach Anspruch 1 oder 2, **dadurch gekennzeichnet, daß** in der Sperrstellung des Ventils die Nuten (15) eine Verbindung zwischen der gesteuerten Kammer (5) und dem Abfluß (4) bilden.

4. Elektrohydraulisches Steuerventil nach einem der Ansprüche 1 bis 3, **dadurch gekennzeichnet, daß** die Verstellung des Kolbens (7) über elektrisch steuerbare Antriebe (10), wie on-Off-Magnete, Proportionalmagnete oder Stellmotoren, mit einem Betätigungselement (9) zur Einwirkung auf den Kolben (7) durchführbar ist.

5. Elektrohydraulisches Steuerventil nach einem der Ansprüche 1 bis 4, **dadurch gekennzeichnet, daß** der Stellbewegung des Kolbens (7) ein Wegsensor (16) zugeordnet ist.

6. Elektrohydraulisches Steuerventil nach einem der Ansprüche 1 bis 5, **dadurch gekennzeichnet, daß** die Kammern (3,4) des Ventils jeweils Drucksensoren (17,18) aufweisen.

7. Elektrohydraulisches Steuerventil nach einem der Ansprüche 1 bis 6, **dadurch gekennzeichnet, daß** die Signale der Drucksensoren (17,18) und/oder des Wegsensors (16) einer Steuereinheit (19) zuführbar sind und über vorgegebene Steuer- und Regelrogramme eine elektrische Ansteuerung zur Einstellung des Kolbens (7) durchführbar ist.

8. Elektrohydraulisches Steuerventil nach einem der Ansprüche 1 bis 7, **dadurch gekennzeichnet, daß** die Kammern (3, 4) mit einer Druckwaage (25) sind.

9. Elektrohydraulisches Steuerventil nach einem der Ansprüche 1 bis 8, **dadurch gekennzeichnet, daß** zwischen Ventilgehäuse (1) und Antrieb (10) ein Aufnahmeraum (26) für eine elektrische Ansteuerung mit Steuer- und Regelprogramm ausgebildet ist.

10. Elektrohydraulisches Steuerventil nach einem der Ansprüche 1 bis 9, **dadurch gekennzeichnet, daß** das Steuerventil als Cartridgeventil ausgebildet ist.

## Claims

1. Electrohydraulic control valve for continuous control of a hydraulic resistance between zero and infinity, wherein an electrically controllable piston (7) of the valve is adjustable against a governor spring (8) and a valve seat (6) is controllable via a valve plug (24) of the piston (7) and, for the purpose of force equalization, the piston (7) has a connection (11) between both sides of the piston (7) for the purpose of connection to a chamber (3) and both sides of the piston (7) are realized with the same load-receiving cross-sectional area, the valve being realized as a seat valve and a flow between an inflow (2), the chamber (3) and an outflow (4) of a controlled chamber (5) being controllable via the valve seat (6) by means of the piston (7) with the valve plug (24), and there being arranged in the controlled chamber (5) a control edge (14) to which there is assigned a control plate (13) of the positionable piston (7), and the control plate (13) having grooves (15) for the purpose of passage control which, in dependence on the control plate (13), through the movement of the piston (7), release a defined quantity transfer for the purpose of fine control.

2. Electrohydraulic control valve according to Claim 1, **characterized in that** the grooves (15), as in triangular shape, arranged on the control plate (13) of the piston (7) release greater or lesser passage cross-sections in dependence on the position of the piston.

3. Electrohydraulic control valve according to either of Claims 1 or 2, **characterized in that**, when the valve is in the shut-off position, the grooves (15) constitute a connection between the controlled chamber (5) and the outflow (4) .

4. Electrohydraulic control valve according to any one of Claims 1 to 3, **characterized in that** the positioning of the piston (7) can be effected via electrically controllable drives (10), such as on-off magnets, proportional magnets or positioning motors, having an actuating element (9) for acting upon the piston (7).

5. Electrohydraulic control valve according to any one of Claims 1 to 4, **characterized in that** a position sensor (16) is assigned to the positioning movement of the piston (7).

6. Electrohydraulic control valve according to any one of Claims 1 to 5, **characterized in that** the chambers (3, 4) of the valve each have pressure sensors (17, 18).

7. Electrohydraulic control valve according to any one of Claims 1 to 6, **characterized in that** the signals of the pressure sensors (17, 18) and/or of the position sensor (16) can be supplied to a control unit (19) and electrical activation for the purpose of adjusting the piston (7) can be effected by means of predefined open-loop and closed-loop control programs.

8. Electrohydraulic control valve according to any one of Claims 1 to 7, **characterized in that** the chambers (3, 4) are connected to a pressure balance (25).

9. Electrohydraulic control valve according to any one of Claims 1 to 8, **characterized in that** a receiving space (26) for an electrical activation system with an open-loop and closed-loop control program is realized between the valve housing (1) and the drive (10).

10. Electrohydraulic control valve according to any one of Claims 1 to 9, **characterized in that** the control valve is realized as a cartridge valve.

## Revendications

1. Vanne de commande électro-hydraulique pour une commande continue d'une résistance hydraulique entre zéro et l'infini, un piston (7) à commande électrique de la vanne pouvant être ajusté à l'encontre d'un ressort de réglage (8) et un siège de vanne (6) pouvant être commandé par l'intermédiaire d'un cône de vanne (24) du piston (7), et le piston (7) présentant, pour l'équilibrage des forces, une communication (11) entre les deux faces du piston (7) pour le raccordement à une chambre (3), et les deux faces du piston (7) étant réalisées avec la.même surface transversale efficace, la vanne étant conçue en tant que vanne à siège, et un écoulement entre une entrée (2), la chambre (3) et une sortie (4) d'une chambre commandée (5), pouvant être commandé par l'intermédiaire du siège de vanne (6), au moyen du piston (7), à l'aide du cône de vanne (24), et un bord de commande (14), auquel est associée une surface de commande (13) du piston (7) réglable, étant agencé dans la chambre commandée (5), et la surface de commande (13) présentant des rainures (15) pour la commande du passage qui, en fonction de la surface de commande (13) libèrent, par le mouvement du piston (7), le passage d'une quantité définie pour une commande de précision.

2. Vanne de commande électro-hydraulique selon la revendication 1, **caractérisée en ce que** les rainures (15) agencées, par exemple en forme de triangle, sur la surface de commande (13) du piston (7), libèrent des sections transversales de passage plus grandes respectivement plus petites en fonction de la position du piston.

3. Vanne de commande électro-hydraulique selon revendication 1 ou 2, **caractérisée en ce que**, dans la position de fermeture de la vanne, les rainures (15) forment une liaison entre la chambre commandée (5) et la sortie (4).

4. Vanne de commande électro-hydraulique selon l'une des revendications 1 à 3, **caractérisée en ce que** le déplacement du piston (7) peut être effectué par l'intermédiaire d'entraînements à commande électrique (10), tels que des aimants tout ou rien, des aimants proportionnels ou des servomoteurs, avec un élément d'actionnement (9) agissant sur le piston (7).

5. Vanne de commande électro-hydraulique selon l'une des revendications 1 à 4, **caractérisée en ce qu'**au mouvement d'ajustement du piston (7) est associé un capteur de déplacement (16).

6. Vanne de commande électro-hydraulique selon l'une des revendications 1 à 5, **caractérisée en ce que** les chambres (3, 4) de la vanne présentent chacune des capteurs de pression (17,18).

7. Vanne de commande électro-hydraulique selon l'une des revendications 1 à 6, **caractérisée en ce que** les signaux des capteurs de pression (17, 18) et / ou des capteurs de déplacement (16) peuvent être conduits à une unité de commande (19) et qu'une excitation électrique pour le positionnement du piston (7) peut être exécutée par l'intermédiaire de programmes de commande et de réglage prédéterminés.

8. Vanne de commande électro-hydraulique selon l'une des revendications 1 à 7, **caractérisée en ce que** les chambres (3, 4) sont reliées à une balance de pression (25).

9. Vanne de commande électro-hydraulique selon l'une des revendications 1 à 8, **caractérisée en ce qu'**un espace de réception (26) est formé entre le boîtier (1) de la vanne et l'entraînement (10) pour une excitation électrique avec un programme de commande et de réglage.

10. Vanne de commande électro-hydraulique selon l'une des revendications 1 à 9, **caractérisée en ce que** la vanne de commande est conçue en tant que vanne à cartouche.
